(19) Europäisches Patentamt
European Patent Office
Office européen des brevets

(11) EP 0 994 919 B1

(12) **EUROPEAN PATENT SPECIFICATION**

(45) Date of publication and mention of the grant of the patent:
**23.06.2004 Bulletin 2004/26**

(21) Application number: **98942676.2**

(22) Date of filing: **08.07.1998**

(51) Int Cl.⁷: **C08L 23/02**
// C08L23:02

(86) International application number:
**PCT/EP1998/004979**

(87) International publication number:
**WO 1999/002603 (21.01.1999 Gazette 1999/03)**

(54) **POLYOLEFIN/THERMOPLASTIC POLYURETHANE COMPOSITIONS MADE FROM HYDROXY-TERMINATED POLYDIENE POLYMERS**

POLYOLEFIN/THERMOPLASTISCHE-POLYURETHANZUSAMMENSETZUNGEN AUS HYDROXYLENDGRUPPENHALTIGEN POLYDIENPOLYMEREN

COMPOSITIONS DE POLYOLEFINE/POLYURETHANE THERMOPLASTIQUE PREPAREES A PARTIR DE POLYMERES DE POLYDIENE A TERMINAISON HYDROXY

(84) Designated Contracting States:
**BE DE ES FR GB IT NL SE**

(30) Priority: **10.07.1997 US 52216 P**

(43) Date of publication of application:
**26.04.2000 Bulletin 2000/17**

(73) Proprietor: **KRATON Polymers Research B.V.**
**1031 CM Amsterdam (NL)**

(72) Inventor: **CENENS, Jozef, Lucien, Rudolf**
**Sugar Land, TX 77478 (US)**

(74) Representative:
**Kortekaas, Marcellinus C. J. A. et al**
**KRATON Polymers Research B.V.,**
**P.O. Box 37666**
**1030 BH Amsterdam (NL)**

(56) References cited:
**EP-A- 0 347 794**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 994 919 B1

Printed by Jouve, 75001 PARIS (FR)

## Description

This invention relates to thermoplastic polyurethane/polyolefin compositions. More specifically, the invention relates to compatible thermoplastic polyurethane/polyolefin compositions.

Thermoplastic Polyurethanes (TPU) are reaction products of 1) a polymeric diol, 2) a diisocyanate, and 3) a chain extender. The diol is usually either a polyether or a polyester of about 1000 to 4000 number average molecular weight. The diisocyanate used is commonly 4,4-diphenylmethane diisocyanate (MDI) but many other isocyanates may also be used. The chain extender is a low molecular weight diol, usually 1,4-butane diol (BDO), but in other work it has been found to be advantageous to use branched diols such as 2-ethyl-1,3-hexane diol (PEP). TPU's such as these have been considered for use as additives to polypropylene to improve impact resistance and to improve adhesion of paint to the modified polypropylene. However, because of the polar nature of polyethers and polyesters, these conventional TPU's are too polar to be broadly compatible with polypropylene and other polyolefins and other non-polar polymers such as EPDM and butadiene and isoprene rubbers. This incompatibility is the reason why their blends frequently delaminate and therefore are not useful. From EP0347794A1 a thermoplastic resinous composition is known that comprises a polyolefin, a thermoplastic polyurethane component and a compatibilizing amount of at least one modified polyolefin. This reference does not suggest how to obtain a polyolefin/thermoplastic polyurethane composition that is compatible without the need of a compatibilizer. The problem the present invention sets out to solve is to provide a compatible polyolefin/thermoplastic polyurethane composition. Such a composition has now surprisingly been found.

Therefore, the present invention relates to a polyolefin/thermoplastic polyurethane composition which comprises:

(a) from 99 to 80 percent by weight (%wt) of a polyolefin, and

(b) from 1 to 20 %wt of a thermoplastic polyurethane composition having an OH/NCO molar ratio of 0.9 to 1.1 which is comprised of:

 (1) from 90 to 40 %wt of a hydrogenated polydiene diol having a hydroxyl equivalent weight of 750 to 10,000,

 (2) from 5 to 50 %w of a diisocyanate, and

 (3) from 4 to 14 %wt of a chain extender having a functional group equivalent weight of from 30 to 300.

Hydroxy functional polydiene polymers (polydiene diols) are known. United States Patent No. 5,393,843 discloses that formulations containing these polymers, a melamine resin, and an acid catalyst can be cured by baking under normal bake conditions. This same patent also discloses that these polymers can be mixed with isocyanates to yield polyurethane compositions that cure at ambient temperature. It is known that, for instance, hydrogenated polybutadiene diols (EB diol) can be crosslinked by reaction with polyisocyanates at stoichiometry near 1/1 NCO/OH (NCO represents the isocyanate functionality which is active in the crosslinking reaction and OH represents the hydroxyl functionality).

The preferred polyolefins are polypropylene homopolymer and polypropylene copolymers containing at least 60 %wt of polymerized propylene units.

The preferred polydiene diol is a hydrogenated polybutadiene diol. Preferably, the polydiene diol has a hydroxyl equivalent weight of 750 to 5000.

The preferred chain extenders are alkyl-substituted aliphatic diols preferably $C_1$-$C_8$ alkyl-substituted aliphatic diols such as 2-ethyl-1,3-hexane diol (PEP diol), 2,2,4-trimethyl-1,3-pentane diol (TMPD diol), and 2-ethyl-2-butyl-1,3-propane diol (BEPD diol). The aliphatic diol is preferably a $C_3$-$C_{50}$ aliphatic diol, more preferably a $C_3$-$C_{12}$ aliphatic diol.

Hydroxy functional polydiene polymers and other polymers containing ethylenic unsaturation can be prepared by copolymerizing one or more olefins, particularly diolefins, by themselves or with one or more alkenyl aromatic hydrocarbon monomers. The copolymers may, of course, be random, tapered, block or a combination of these, as well as linear, radial or star.

The hydroxy functional polydiene polymers may be prepared using anionic initiators or polymerization catalysts. Such polymers may be prepared using bulk, solution or emulsion techniques. When polymerized to high molecular weight, the polymer will, generally, be recovered as a solid such as a crumb, a powder, or a pellet. When polymerized to low molecular weight, it may be recovered as a liquid such as in the present invention.

In general, when solution anionic techniques are used, (co)polymers of conjugated diolefins, optionally with vinyl aromatic hydrocarbons, are prepared by contacting the monomer or monomers to be polymerized simultaneously or sequentially with an anionic polymerization initiator such as group IA metals, their alkyls, amides, silanolates, naphthalides, biphenyls or anthracenyl derivatives. It is preferred to use an organo alkali metal (such as sodium or potassium) compound in a suitable solvent at a temperature in the range from -150°C to 300°C, preferably at a temperature in the range from 0°C to 100°C. Particularly effective anionic polymerization initiators are organo lithium compounds having

the general formula:

$$RLi_n$$

wherein R is an aliphatic, cycloaliphatic, aromatic or alkyl-substituted aromatic hydrocarbon radical having from 1 to about 20 carbon atoms and n is an integer of 1 to 4.

Conjugated diolefins (dienes) which may be polymerized anionically include those conjugated diolefins containing from 4 to 24 carbon atoms such as 1,3-butadiene, isoprene, piperylene, methylpentadiene, phenyl-butadiene, 3,4-dimethyl-1,3-hexadiene, and 4,5-diethyl-1,3-octadiene. Isoprene and butadiene are the preferred conjugated diene monomers for use in the present invention because of their low cost and ready availability. Alkenyl (vinyl) aromatic hydrocarbons that may be copolymerized include vinyl aryl compounds such as styrene, various alkyl-substituted styrenes, alkoxy-substituted styrenes, vinyl naphthalene and alkyl-substituted vinyl naphthalenes.

The hydroxy functional polydiene polymers may have number average molecular weights of from 1500 to 20,000. Lower molecular weights require excessive crosslinking whereas higher molecular weights cause very high viscosity, making processing very difficult. Most preferably, the polymer is a predominately linear diol having a number average molecular weight of from 1500 to 10,000 (hydroxyl equivalent weight of 750 to 5000 because its a diol and has two hydroxyls) because this offers the best balance between the cost of the polymer, achieving good processing behavior, and achieving the right balance of mechanical properties in the final thermoplastic polyurethane. The average functionality of the polydiene diol is preferably from 1.8 to 2.0, more preferably 1.9 to 2.0.

Hydrogenated polybutadiene diols are preferred for use herein because they are easily prepared, they have low glass transition temperature, and they have excellent weatherability. The diols, dihydroxylated polydienes, are typically synthesized by anionic polymerization of conjugated diene hydrocarbon monomers with lithium initiators. This process is well known as described in U.S. Patents Nos. 4,039,593 and Re. 27,145. Polymerization commences with a monolithium or dilithium initiator that builds a living polymer backbone at each lithium site.

Polydiene diols used in this invention may be prepared anionically with a dilithium initiator such as described in United States Patents Nos. 5,391,663, 5,393,843, 5,405,911, and 5,416,168. The polydiene polymer can be made using a dilithium initiator, such as the compound formed by reaction of two moles of sec-butyllithium with one mole of diisopropenylbenzene. This diinitiator is typically used to polymerize a diene in a solvent typically composed of 90%wt cyclohexane and 10%wt diethylether. The molar ratio of diinitiator to monomer determines the molecular weight of the polymer. The living polymer is then capped with two moles of ethylene oxide and terminated with two moles of methanol to yield the desired polydiene diol.

Polydiene diol polymers can also be made using a mono-lithium initiator that contains a hydroxyl group which has been blocked as the silyl ether. Details of the polymerization procedure can be found in U.S. Patent 5,376,745. A suitable initiator is hydroxypropyllithium in which the hydroxyl group is blocked as the tert-butyl-dimethylsilyl ether. This mono-lithium initiator can be used to polymerize conjugated diene in hydrocarbon or polar solvent. The living polymer is then capped with ethylene oxide and terminated with methanol. The silyl ether is then removed by acid catalyzed cleavage in the presence of water yielding the desired polymer.

A hydrogenated polybutadiene diol polymer can have any butadiene microstructure. However, it is preferred that it have at least 30% 1,2-butadiene addition because, after hydrogenation, the polymer would be a waxy solid at room temperature if it contained less than 30% 1,2-butadiene addition and, when used in the process of this invention, it would give a TPU which is not as rubbery as it would be if the 1,2-butadiene content is at least 30%. Although a hydrogenated polybutadiene having a 1,2-butadiene addition of at least 30% will give TPU compositions within this invention which are rubbery at room temperature, it is preferred that the 1,2-butadiene content is between 40 and 60% to minimize viscosity of the hydrogenated polybutadiene diol. A polymer with the desired 1,2-butadiene content may typically be prepared by controlling the anionic polymerization of the 1,3-butadiene with structure modifiers such as diethylether or glyme (1,2-diethoxyethane) to obtain the desired amount of 1,2-addition.

A hydrogenated polyisoprene diol polymer within the scope of this invention can have any isoprene microstructure. However, it preferably has more than 80% 1,4-addition of the isoprene, more preferably more than 90% 1,4-addition of the isoprene, in order to minimize the viscosity of the polymer. Polyisoprene diols of this type can be prepared by anionic polymerization in the absence of microstructure modifiers that increase 3,4-addition of the isoprene. The diene microstructures are typically determined by $^{13}C$ nuclear magnetic resonance (NMR) in chloroform.

The preferred method of making the polymers of the present invention involves the use of lithium initiators having the structure:

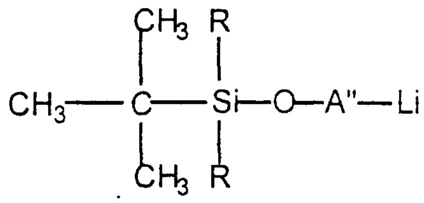

(2)

wherein each R is methyl, ethyl, n-propyl, or n-butyl and A" is an alkyl-substituted or non-substituted propyl bridging group, including $-CH_2-CH_2-CH_2-$ (1,3-propyl), $-CH_2-CH(CH_3)-CH_2-$ (2-methyl-1,3-propyl), and $-CH_2-C(CH_3)_2-CH_2-$ (2,2-dimethyl-1,3-propyl), or an alkyl-substituted or non-substituted octyl bridging group, including $-CH_2-CH_2-CH_2-CH_2-CH_2-CH_2-CH_2-CH_2-$ (1,8-octyl), because these initiators will initiate polymerization of anionic polymers at surprisingly higher polymerization temperatures with surprisingly lower amounts of dead initiator (higher efficiency) than similar initiators wherein A" is replaced by alkyl-substituted or non-substituted butyl, pentyl, or hexyl bridging groups, such as $-CH_2-CH_2-CH_2-CH_2-$ (1,4-butyl), $-CH_2-CH_2-CH_2-CH_2-CH_2-$(1,5-pentyl), or $-CH_2-CH_2-CH_2-CH_2-CH_2-CH_2-$ (1,6-hexyl).

Certain hydroxylated polydiene polymers useful in the present invention have the structural formula

$$\text{(I)} \qquad \text{HO-A-OH} \qquad \text{or} \qquad \text{(HO-A)}_n\text{-X}$$

wherein A is a homopolymer of a conjugated diolefin monomer, a copolymer of two or more conjugated diolefin monomers, or a copolymer of one or more conjugated diolefin monomers with a monoalkenyl aromatic hydrocarbon monomer, where n is two and where X is the residue of a coupling agent. During the preparation of these hydroxylated polydiene polymers, it is possible to make some mono-functional polymer having the structural formula HO-A, either by incomplete capping of the living polymer or by incomplete coupling via the coupling agent. Although it is preferred that the amount of this mono-functional polymer is minimal, satisfactory thermoplastic polyurethane compositions within this invention can be achieved even when the amount of mono-functional polymer is as high as 20%w of the hydroxylated polymer in the composition.

Other hydroxylated polydiene polymers useful in the present invention have the structural formula

$$\text{(II)} \qquad \text{HO-A-S}_z\text{-B-OH} \qquad \text{or} \qquad \text{(HO-A-S}_z\text{-B)}_n\text{-X} \qquad \text{or}$$

$$\text{HO-S}_z\text{-A-B-S}_y\text{-OH} \qquad \text{or} \qquad \text{(HO-S}_z\text{-A-B)}_n\text{-X}$$

wherein A and B are polymer blocks which may be homopolymer blocks of conjugated diolefin monomers, copolymer blocks of conjugated diolefin monomers, or copolymer blocks of diolefin monomers and monoalkenyl aromatic hydrocarbon monomers, where S is a vinyl aromatic polymer block, where y and z are 0 or 1, where n is 2, and where X is the residue of a coupling agent.

These polymers may contain up to 60% by weight of at least one vinyl aromatic hydrocarbon, preferably styrene. The A blocks and the B blocks may have a number average molecular weight of from 100 to 20,000, preferably 500 to 20,000, and most preferably 1000 to 15,000. The S block may have a number average molecular weight of from 500 to 10,000. Either the A or the B block may be capped with a miniblock of polymer, 50 to 1000 number average molecular weight, of a different composition, to compensate for any initiation, tapering due to unfavorable copolymerization rates, or capping difficulties. It will be appreciated that the total molecular weight should be such as to give a functional group equivalent weight in the range of 750 to 10,000.

The molecular weights of the polydiene polymers are conveniently measured by Gel Permeation Chromatography (GPC), where the GPC system has been appropriately calibrated. The molecular weights reported here are number average molecular weights (in g/mol) calculated from the chromatographs. The materials used in the columns of the GPC are styrene-divinylbenzene gels or silica gels. The solvent is tetrahydrofuran and the detector is a refractive index detector.

The polydiene diol is typically hydrogenated according to procedures well known to those skilled in the art such as disclosed in U.S. Patent Reissue 27,145. The hydrogenation of these polymers and copolymers may be carried out by a variety of well established processes including hydrogenation in the presence of such catalysts as Raney Nickel, noble metals such as platinum and the like, soluble transition metal catalysts and titanium catalysts as in U.S. Patent 5,039,755. The polymers may have different diene blocks and these diene blocks may be selectively hydrogenated as described in U.S. Patent 5,229,464.

The chain extender is a low molecular weight material having at least two functional groups that will react with the polyisocyanate. The number average molecular weight preferably is from 60 to 600, most preferably 80 to 300. Suitable functional groups include primary and secondary alcohols, dicarboxylic acids, mercaptans, and primary and secondary amines. The preferred functional group are hydroxy groups. The equivalent weight of the chain extender will usually be between about 30 and about 300 grams per functional group, preferably between about 40 and 150 grams per functional group. The functionality of the chain extender should preferably be very near to two but can be higher as long as the reaction mass does not gel during the chain extension reaction during synthesis of the TPU. The most commonly used chain extender is 1,4-butane diol (BDO).

Chain extenders best suited for use in the present invention include branched aliphatic diols having 5 to 30 carbon atoms, especially alkyl-substituted aliphatic diols such as 2-ethyl-1,3-hexane diol (PEP diol), 2,2,4-trimethyl-1,3-pentane diol (TMPD diol), and 2-ethyl-2-butyl-1,3-propane diol (BEPD diol) because they are substituted, branched diols and, as such, are not as polar and therefore not as incompatible with the polydiene polymers as unsubstituted, straight chain diols. Small amounts of triols such as trimethylolpropane or triethylolpropane may also be used in combination with these diols as long as the reaction mass does not gel during the synthesis of the TPU.

The isocyanate used in this invention is an isocyanate having an average functionality of about two isocyanate groups per molecule, preferably from 1.8 to 2.1, more preferably from 1.8 to 2.0. Diisocyanates having a functionality of two isocyanate groups per molecule are preferred for use in preparing the TPU for use in this invention. Examples of suitable diisocyanates are 2,4-toluene diisocyanate, 4,4'-diphenylmethane diisocyanate, mixtures of isomers of diphenylmethane diisocyanate, paraphenyldiisocyanate, isophoronediisocyanate, bis(4-isocyanatocyclohexyl)methane, naphthalene diisocyanate and hexamethylene diisocyanate. Polyisocyanates can be made from these diisocyanates by dimerizing or trimerizing the diisocyanates using proprietary catalysts to yield biurets, isocyanaurates, etc. Small amounts of these polyisocyanates can be used in combination with the diisocyanates as long as the reaction mass does not gel during synthesis of the TPU.

Specific commercially available isocyanates which can be used in this invention include those found in the following table:

| Designation | Chemical Identification | Eq. Wt. | Supplier |
|---|---|---|---|
| Mondur M (MDI) | 1,4-diphenylmethane diisocyanate | 125 | Bayer AG |
| Vestanat (IPDI) | Isophorone diisocyanate | 111 | Huls |
| Mondur, TD-80 (TDI) | Toluene diisocyanate | 87 | Bayer AG |
| Desmodur W (HMDI) | Methylene bis(4-cyclohexyl-isocyanate) | 131 | Bayer AG |
| Desmodur H (HDI) | 1,6-hexamethylene diisocyanate | 84 | Bayer AG |

Mondur, Vestanat, and Desmodur are trademarks 4,4-diphenylmethane diisocyanate (MDI) is especially useful and is preferred for use herein because it has high reactivity and because it gives TPU's having well formed hard phases, giving TPU's having high strength and elasticity.

The polyolefins which can be used in the compositions of the present invention include crystalline polyolefins, for example, polypropylene homopolymer, polypropylene copolymers containing at least 60 %wt of polymerized propylene units, polyethylene, polybutylene, linear low density polyethylene (which is actually a copolymer of ethylene and a small amount of another monomer, usually butylene, hexene, or octene), as well as blends of these crystalline polymers with up to about 40%w of an elastomer such as EPDM, and polybutadiene and polyisoprene rubbers. These polyolefin polymers are all very nonpolar and therefore, when conventional polyurethanes made from polyethers or polyesters are blended with them, the blends are incompatible and have poor properties and tend to delaminate.

The compositions of this invention contain a major proportion of the polyolefin blended with a minor proportion of the particular types of thermoplastic polyurethanes. The thermoplastic polyurethane component of the invention composition must comprise from 1 to 20%wt of the polyolefin/thermoplastic polyurethane composition, preferably 1 to 10 %wt. If less than 1 %wt is used, then the benefit of improved paint adhesion is not developed, and if more than 20 %wt is used, then the blends may be incompatible and delaminate under stress.

The molar ratio of the active hydroxyls in the polydiene diol and the chain extender to the active NCO groups in the polyisocyanate must be from 0.9 to 1.1 in order to achieve maximum molecular weight during the chain extension reaction in the synthesis of the TPU. Generally then, the polydiene diol is present in the TPU in an amount from 90 to 40 %wt, the chain extender is present in an amount from 4 to 14 %wt, and the diisocyanate is used in an amount from

5 to 50 %wt. The preferred concentrations of the ingredients in the TPU are 75 to 55 %wt of the polydiene diol, 7 to 11 %wt of the chain extender and 15 to 30 %wt of the diisocyanate.

EXAMPLES

Preparation of Thermoplastic Polyurethanes

Three thermoplastic polyurethanes (TPUs) were used in this study. TPU-1 was made using a hydrogenated polybutadiene diol (EB diol) having a number average molecular weight of 3300 (hydroxyl equivalent weight = 1650), MDI (MONDUR M from Bayer), and PEP diol (from Aldrich) at an 85/15 ratio by weight of EB diol/PEP diol and at 1/1 NCO/OH molar ratio. TPU-2 was made using a 2000 number average molecular weight polypropylene oxide polyether diol (PPG-2025 from Arco), MDI, and BDO (from Aldrich) at a 90/10 ratio of PPG-2025/BDO and at 1/1 NCO/OH. The third TPU was a commercial product, TEXIN 985-A (from Bayer; TEXIN is a trademark), based on a polyether diol. The formulations for TPU-1 and TPU-2 are given in Table 1. The Shore A hardness and tensile properties measured on injection molded plaques of all three TPUs are also given in Table 1.

TPU-1 and TPU-2 were made by the prepolymer method in which the polymeric diol is first reacted with MDI and then the chain extender is added. Commercially, it is envisaged this would be done in a solvent free process in an extruder reactor system. Since an extruder reactor was not available for this work, the TPUs were made at about 50%wt solids in toluene and the solvent was removed after the reaction.

The EB diol, the polyether diol, and the chain extenders were dried in a vacuum oven for 1 hour at 80°C and the toluene was dried over molecular sieves. MDI and the polymeric diols were dissolved at 50%wt in toluene. The required amounts of these solutions were weighed into 2 liter resin kettles, a small amount of DABCO T-12 catalyst (DABCO is a trademark) was added and the kettles were purged with dry nitrogen as they were being heated to 80°C. The reactants were held at 80°C for 2 hours to make the prepolymer. The PEP or BDO chain extenders were then added. As chain extension began, the viscosity quickly became so high the solutions could no longer be stirred so the contents of the resin kettles were scraped out into trays. The trays were placed in an oven for 3 hours at 80°C under a dry nitrogen purge to complete the preparation of the TPUs. The samples were then cut into small pieces and the remaining toluene was evaporated. The pieces were frozen in liquid nitrogen and were ground to a coarse powder with a rotary grinder and then dried for 2 hours at 120°C. They were then stored in cans purged with dry nitrogen until they were used.

Table 1

| Composition (%wt) | TPU-1 | TPU-2 | TEXIN |
|---|---|---|---|
| EB diol | 64.2 | - | - |
| PPG 2025 | - | 64.4 | - |
| TEXIN 985-A | - | - | 100 |
| PEP diol | 11.2 | - | - |
| BDO diol | - | 7.2 | - |
| MONDUR M | 24.4 | 28.4 | - |
| Shore A Hardness | | | |
| Instantaneous | 69 | 77 | 79 |
| 10 second | 62 | 70 | 78 |
| Tensile Properties | | | |
| Tensile Strength, psi (MPa) | 330 (2.28) | NA | >2850 (19.65) |
| Elongation @ Break, % | >620 | NA | >620 |

Preparation of Blends of Polypropylene with Polyurethanes

Each of the three TPU's was dry-blended with polypropylene homopolymer (SHELL PP DX5015H (SHELL is a trademark)) in a plastic bag at 90/10 and 70/30 ratios by weight of PP/TPU. The dry blends were mixed in a 2-inch (5.1 cm) Berstorff twin screw extruder, stranded, chopped, and dried prior to use. Plaques, about 90 mil (2.3 mm) thick, were then prepared from each of the six PP/TPU blends and from the individual polymers themselves using an Arburg injection molding machine.

Shore A and Shore D hardness and stress/strain properties (ASTM D-1708, microtensile, 0.5 in/min (1.27

cm/min) crosshead speed) were measured on each of the plaques. The results are presented in Tables 2 and 3. No tensile properties were measured on the pure 100% TPU-2 because satisfactory plaques could not be made with the limited amount of sample available. The morphology of each composition was also determined by microtoming a piece from a plaque, staining with ruthenium tetroxide, and examining by transmission electron microscope.

Properties of Pure Polyurethanes

The results described in Table 2 show that both of the polyether TPU's (TEXIN and TPU-2) have instantaneous Shore A of about 78 while TPU-1 based on the EB diol is somewhat softer with an instantaneous Shore A of 69. TEXIN 985-A has properties typical of a commercial, high quality TPU. Its tensile stress reached 2850 psi (19.65 MPa) at 620% elongation which was the limit of crosshead movement on the Instron machine. In contrast, TPU-1 was a weaker elastomer. TPU-1 reached a maximum tensile stress of only about 330 psi (2.28 MPa) although it did have a good elongation at break of about 600%. As mentioned above, plaques of TPU-2 were not considered to be good enough for stress/strain measurements.

Properties of Blends of Polypropylene with Polyurethanes

The results in Table 2 show that addition of each of the three TPU's causes about the same drop in Shore D hardness of the PP, from about 70 for the neat PP to about 68 for the 90/10 blends and to about 60 for the 70/30 blends. The three TPU's differ considerably in their effect on the stress/strain properties of PP/TPU blends. In the 90/10 PP/TPU blends, TPU-1 clearly gives much better blends. The results in Table 3 show that 10%w TPU-1 can be incorporated into the PP with no reduction in yield stress or in tensile strength or elongation. TPU-2 causes a significant reduction in yield stress, tensile strength ,and elongation, and TEXIN causes an even greater reduction in these properties. The reason for this is difference is thought to be that TPU-1 is more compatible with PP than the polyether based TPU's and so TPU-1 gives better dispersions in PP. The smaller particle size of the dispersion of TPU-1 in PP was confirmed by the electron micrographs.

The differences in the effects of the three TPU's on the properties of the polypropylene blends are much smaller in the 70/30 PP/TPU blends. The major effect of all three TPU'S is the substantial reduction in elongation. It was observed qualitatively that delamination of the PP/polyether TPU's was much easier than delamination of the PP/TPU-1 blend.

Table 2

| Composition (%wt) | | | | Shore A Hardness | | Shore D Hardness | |
|---|---|---|---|---|---|---|---|
| PP | TPU-1 | TPU-2 | TEXIN | Instant. | 10 sec. | Instant. | 10 sec. |
| 100 | - | - | - | 92[a] | 92 [a] | 70 | 66 |
| 90 | 10 | - | - | - | - | 68 | 63 |
| 70 | 30 | - | - | - | - | 59 | 52 |
| - | 100 | - | - | 69 | 62 | 24 [a] | 18 [a] |
| 90 | - | 10 | - | - | - | 69 | 65 |
| 70 | - | 30 | - | - | - | 59 | 52 |
| - | - | 100 | - | 77 | 70 | 24 [a] | 16 [a] |
| 90 | - | - | 10 | 95 [a] | 95 [a] | 68 | 64 |
| 70 | - | - | 30 | 91 | 90 | 62 | 55 |
| - | - | - | 100 | 79 | 78 | 36 | 31 |

[a] - the value is out of the range of reliability of the test method

Table 3

| Composition (%wt) | | | | Young's | Yield | | Tensile | |
|---|---|---|---|---|---|---|---|---|
| PP | TPU-1 | TPU-2 | TEXIN | Modulus psi (MPa) | Stress psi (MPa) | Strain (%) | Stress psi (MPa) | Strain (%) |
| 100 | - | - | - | 126000 (869) | 4420 (30.5) | 10 | 4610 (31.8) | 540 |
| 90 | 10 | - | - | 129000 (889) | 4410 (30.4) | 11 | 4880 (33.6) | 590 |
| 70 | 30 | - | - | 91000 (627) | 2580 (17.8) | 9 | 2360 (16.3) | 47 |
| - | 100 | - | - | 400 (2.76) | 390 (2.69) | 450 | 330 (2.28) | >620 |
| 90 | - | 10 | - | 146000 (1006) | 4140 (28.5) | 7 | 3370 (23.2) | 100 |
| 70 | - | 30 | - | 98000 (676) | 2260 (15.6) | 6 | 2140 (14.8) | 7 |
| - | - | 100 | - | [a] | [a] | [a] | [a] | [a] |
| 90 | - | - | 10 | 139000 (958) | 3530 (24.3) | 5 | 2940 (20.3) | 35 |
| 70 | - | - | 30 | 96000 (662) | 2560 (17.7) | 7 | 1610 (11.1) | 86 |
| - | - | - | 100 | 1800 (12.4) | 600 (4.14) | 50 | >2850 (19.7) | >620 |

[a] - The quality of the plaques was considered too poor for use in measuring tensile properties.

Effect of Polyurethanes on Paint Adhesion

Polypropylene is a very difficult substrate to paint because, being a nonpolar polyolefin, there are no polar components to which the paint can bond. A simple study was done in this work to determine whether addition of these TPU's to polypropylene would improve the paintability of the PP/TPU blend.

There is a wide variety of paint formulations to choose from. Two formulations were used in this work. One was a polyester polyol cured with a melamine resin. The polyol was DESMOPHEN 670-A (from Bayer), a saturated polyester having 500 hydroxyl equivalent weight. It is recommended by Bayer for coatings on flexible plastic substrates. The curing agent was hexamethoxymelamine, CYMEL (trademark) 303 (from CYTEC), which is one of the most widely used curing agents for polyester polyols. The curing reaction was catalyzed by dodecylbenzene sulfonic acid, CYCAT (trademark) 600 (from CYTEC). Xylene was added to reduce the viscosity of the coating. The other formulation was an experimental polyolefin / melamine coating based on the EB diol used above, a chain extender which is also a reinforcing diol (a component which increases the hardness of the cured coating), and a melamine resin crosslinker. The reinforcing diol was 2,2,4-trimethyl-1,3-pentane diol (TMPD Diol, from Eastman). The curing agent was a butylated melamine, CYMEL 1156 (from CYTEC). The curing reaction was again catalyzed with CYCAT 600. An aliphatic hydrocarbon solvent, VM&P Naphtha HT (from Shell), was added to reduce the viscosity of the coating. To overcome the incompatability of the EB diol and TMPD Diol, it was necessary to cook this polyolefin / melamine coating resin for 2 hours at 100°C in a resin kettle to obtain a phase stable resin.

The coatings were applied as 60%wt solids solutions onto a plaque of each of the compositions and the coated plaques were baked 1 hour at 121°C to accomplish the curing reaction between the polyol and the melamine. The dry coating thickness was about 1 mil (25 μm).
Coating adhesion was measured by the crosshatch adhesion test (ASTM D3359, Method B) where the scale ranges from 5 (no adhesion loss) to 0 (>65% adhesion loss). Qualitative assessment of adhesion was also made. Differences in the ability of the coating to wet the substrates were also noted. The results are presented in Tables 4 and 5.

The adhesion of both coatings to PP was poor. However, it was observed qualitatively that the polyolefin / melamine coating wet the PP well giving a nice, smooth coating but the polyester / melamine coating wet the PP poorly, giving large areas on the PP where the coating had completely de-wet leaving islands of uncoated PP. Neither of the coatings adhered well to the 90/10 PP/TPU blends. However, it was observed qualitatively that the coatings on the 90/10 PP/TPU-1 plaque were smoother than the coatings on the 90/10 PP/TPU-2 and PP/TEXIN plaques, suggesting that TPU-1 gave a plaque which was easier for the coatings to wet. Results show qualitatively that both coatings adhere much better to the 70/30 PP/TPU blends than to the 90/10 blends, although this is not reflected in the crosshatch adhesion results. However, the 70/30 blend of PP with TPU-1 gave somewhat better adhesion and better wetting characteristics than the blends with the polyether based TPU's.

Table 4a,b

| Plaque Composition (%wt) | | | | | | |
|---|---|---|---|---|---|---|
| PP | TPU-1 | TPU-2 | TEXIN | Crosshatch Adhesion | Qualitative Adhesion | Qualitative Wetting |
| 100 | - | - | - | 0 | Poor | Poor |
| 90 | 10 | - | - | 0 | Poor | Good |
| 70 | 30 | - | - | 1 | Good | V. Good |
| - | 100 | - | - | 5 | Excellent | Good |
| 90 | - | 10 | - | 0 | Poor | Fair |
| 70 | - | 30 | - | 0 | Good | Good |
| - | - | 100 | - | c | c | c |
| 90 | - | - | 10 | 0 | Poor | Good |
| 70 | - | - | 30 | 0 | Good | Good |
| - | - | - | 100 | 5 | Excellent | Good |

[a] - The coating was applied at about 1 mil (25 μm) dry film thickness onto injection molded plaques. It was cured by baking for 1 hour at 121°C.
[b] - The coating composition was the following: DESMOPHEN 670-A - 80 parts by weight (pbw), CYMEL 303 - 20 pbw, CYCAT 600 - 1 pbw, and xylene - 67 pbw.
[c] - The coating was not applied because the quality of the plaque was poor.

Table 5a,b

| Plaque Composition (%wt) | | | | | | |
|---|---|---|---|---|---|---|
| PP | TPU-1 | TPU-2 | TEXIN | Crosshatch Adhesion | Qualitative Adhesion | Qualitative Wetting |
| 100 | - | - | - | 0 | Poor | Poor |
| 90 | 10 | - | - | 1 | Poor | Good |
| 70 | 30 | - | - | 2 | Good | V. Good |
| 90 | - | 10 | - | 0 | Poor | Good |
| 70 | - | 30 | - | 0 | Good | Good |
| 90 | - | - | 10 | 0 | Poor | Good |
| 70 | - | - | 30 | 0 | Good | Good |

[a] - The coating was applied at about 1 mil (25 µm) dry film thickness onto injection molded plaques. It was cured by baking for 1 hour at 121°C.

[b] - The coating composition was the following: EB diol - 40 pbw, TMPD diol - 20 pbw, CYMEL 1156 - 40 pbw, CYCAT 600 - 1 pbw, and VM&P naphtha - 67 pbw. These components were reacted together in a resin kettle for 2 hours at 100°C prior to being coated onto the plaques.

In summary, the 90/10 PP/TPU-1 blend gave better tensile properties than the 90/10 PP/TPU blends with the polyether based TPU's. Incorporation of TPU-1 into PP was more effective in improving paint adhesion, especially to the polyolefin / melamine coating, than incorporation of the TPU's based on the polyethers.

## Claims

**1.** A polyolefin/thermoplastic polyurethane composition which comprises:

(a) from 99to 80percent by weight (%wt) of a polyolefin, and
(b) from 1 to 20 %wt of a thermoplastic polyurethane composition having an OH/NCO molar ratio of 0.9 to 1.1 which is comprised of:

(1) from 90 to 40 %wt of a hydrogenated polydiene diol having a hydroxyl equivalent weight of 750 to 10,000,
(2) from 5 to 50 %wt of a diisocyanate, and
(e) from 4 to 14 %wt of a chain extender having a functional group equivalent weight of from 30 to 300.

**2.** The composition according to claim 1 which comprises from 75 to 55 %wt of the polydiene diol, 7 to 11 %wt of the chain extender, and 15 to 30 %wt of the diisocyanate.

**3.** The composition according to claim 1 or claim 2 wherein the functional group equivalent weight of the chain extender is from 40 to 150.

**4.** The composition according to any one of claims 1-3, wherein the hydroxyl equivalent weight of the polydiene diol is from 750 to 5000.

**5.** The composition according to any one of the preceding claims, wherein the functional groups of the chain extender are hydroxyl groups.

**6.** Articles containing the composition according to any one of the preceding claims.

## Patentansprüche

**1.** Eine Polyolefin/thermoplastische Polyurethanzusammensetzung die Folgendes umfasst:

(a) von 99 bis 80 Gewichts-% (Gew%) eines Polyolefins, und
(b) von 1 bis 20 Gew% einer thermoplastischen Polyurethanzusammensetzung, die ein OH/NCO Molverhältnis von 0,9 bis 1,1 aufweist, umfassend:

(1) von 90 bis 40 Gew% eines hydrierten Polydiendiols, das ein Hydroxyläquivalentgewicht von 750 bis 10.000 aufweist,
(2) von 5 bis 50 Gew% eines Diisocyanats, und
(e) von 4 bis 14 Gew% eines Kettenverlängerers, der ein Äquivalentgewicht der funktionellen Gruppen von 30 bis 300 aufweist.

**2.** Zusammensetzung nach Anspruch 1, die von 75 bis 55 Gew% des Polydiendiols umfasst, 7 bis 11 Gew% des Kettenverlängerers und 15 bis 30 Gew% des Diisocyanats.

**3.** Zusammensetzung nach Anspruch 1 oder Anspruch 2, wobei das Äquivalentgewicht der funktionellen Gruppen des Kettenverlängerers von 40 bis 150 beträgt.

**4.** Zusammensetzung nach einem der Ansprüche 1 bis 3, wobei das Hydroxyläquivalentgewicht des Polydiendiols von 750 bis 5000 beträgt.

**5.** Zusammensetzung nach einem der vorhergehenden Ansprüche,
wobei die funktionellen Gruppen des Kettenverlängerers Hydroxylgruppen sind.

**6.** Formteile enthaltend die Zusammensetzung nach einem der vorhergehenden Ansprüche.

**Revendications**

**1.** Composition de polyoléfine/polyuréthanne thermoplastique qui comprend :

(a) de 99 à 80 pour-cent en poids (% en pds) d'une polyoléfine, et
(b) de 1 à 20% en pds d'une composition de polyuréthanne thermoplastique ayant un rapport OH/NCO de 0,9 à 1,1, qui est formé :

(1) de 90 à 40% en pds d'un diol de polydiène hydrogéné ayant un poids équivalent d'hydroxyle de 750 à 10.000,
(2) de 5 à 50% en pds d'un diisocyanate, et
(3) de 4 à 14% en pds d'un allongeur de chaîne ayant un poids équivalent de groupes fonctionnels de 30 à 300.

**2.** Composition suivant la revendication 1, qui comprend de 75 à 55% en pds du diol de polydiène, 7 à 11% en pds de l'allongeur de chaîne, et 15 à 30% en pds du diisocyanate.

**3.** Composition suivant l'une ou l'autre des revendications 1 et 2, dans laquelle le poids équivalent de groupes fonctionnels de l'allongeur de chaîne est de 40 à 150.

**4.** Composition suivant l'une quelconque des revendications 1 à 3, dans laquelle le poids équivalent d'hydroxyle du diol de polydiène est de 750 à 5.000.

**5.** Composition suivant l'une quelconque des revendications précédentes, dans laquelle les groupes fonctionnels de l'allongeur de chaîne sont des groupes hydroxyle.

**6.** Articles contenant la composition suivant l'une quelconque des revendications précédentes.